**Europäisches Patentamt**

(19) **European Patent Office**

**Office européen des brevets**

(11) Veröffentlichungsnummer: **0 039 438**

**B1**

(12) # EUROPÄISCHE PATENTSCHRIFT

(45) Veröffentlichungstag der Patentschrift:
**23.07.86**

(51) Int. Cl.⁴: **H 01 G 4/30**

(21) Anmeldenummer: **81102966.9**

(22) Anmeldetag: **16.04.81**

(54) **Verfahren zur Herstellung von Schichtkondensatoren.**

(30) Priorität: **07.05.80 DE 3017507**

(43) Veröffentlichungstag der Anmeldung:
**11.11.81 Patentblatt 81/45**

(45) Bekanntmachung des Hinweises auf die Patenterteilung:
**23.07.86 Patentblatt 86/30**

(84) Benannte Vertragsstaaten:
**FR GB IT SE**

(56) Entgegenhaltungen:
**EP-A-0 027 650**
**DE-A-2 236 243**
**DE-A-2 752 767**
**DE-C-2 643 087**
**US-A-3 728 765**

(73) Patentinhaber: **Siemens Aktiengesellschaft, Berlin und München Wittelsbacherplatz 2, D-8000 München 2 (DE)**

(72) Erfinder: **Almahmoud, Saad, Am Herrnberg 52, D-8411 Lappersdorf (DE)**
Erfinder: **Kraus, Hubert, Agnesstrasse 11, D-8400 Regensburg (DE)**
Erfinder: **Riepl, Martin, D-8421 Poikam 30 (DE)**

LIBER, STOCKHOLM 1986

EP 0 039 438 B1

## Beschreibung

Die vorliegende Erfindung betrifft ein Verfahren zur Herstellung von Schichtkondensatoren, bei dem auf eine Trommel mehrere Mutterwickel übereinander gewickelt werden, bei dem zwischen zwei Mutterwickel Trennlagen aus Kunststoff eingewickelt werden, welche über die Stirnflächen der Mutterwickel vorstehen, bei dem die Stirnflächen des so gebildeten Ausgangswickels mit einer Spritzmetallschicht vollständig überdeckt werden, bei dem die über die Spritzmetallschichten überstehenden Teile der Trennlagen vor dem Zerteilen des so gebildeten Ausgangskondensators entfernt werden, bei dem der Ausgangskondensator durch zumindest einen radialen Schnitt aufgetrennt und entlang der Trennlinien in einzelne Mutterkondensatoren zerteilt wird und bei dem die Mutterkondensatoren oder Teile der Mutterkondensatoren in Einzelkondensatoren zersägt werden.

Ein derartiges Verfahren ist aus der DE-PS 26 43087 bekannt. Dort werden die Trennlagen, die aus Kunststoff bestehen, mit jeweils einem Mutterwickel verklebt. Die überstehenden Teile der Trennlagen werden nach dem Aufbringen der Spritzmetallschichten abgeschliffen. Dieses Abschleifen gemäß dem Stand der Technik setzt ein Verkleben der Folien mit dem Mutterwickel voraus, da die üblicherweise zähen Kunststofffolien sonst beim Abschleifen aus dem Ausgangskondensator herausgezogen werden könnten, wodurch sich eine Lockerung des Wickels ergeben könnte. Diese hätte ein ungleichmäßiges Abschleifen der Stirnkontaktschichten zur Folge und könnte zu einer unzulässigen Beschädigung der Mutterkondensatoren führen, da diese in einem locker gewordenen Ausgangskondensator sich gegeneinander verschieben könnten.

EP-A-00 27 650 (Stand der Technik nach Art. 54 (3) EPÜ) beschreibt ein Verfahren zur Herstellung von Schichtkondensatoren, bei dem Trennlagen aus Zellulosebutyratfolien verwendet werden.

Die Aufgabe, die der vorliegenden Erfindung zugrundeliegt, besteht bei einem Verfahren der eingangs beschriebenen Art in einer rationelleren Herstellung des Ausgangskondensators und in einem rationellen und vollständigen Entgraten der einzelnen Mutterkondensatoren.

Diese Aufgabe wird gemäß der Erfindung dadurch gelöst, daß die Trennlagen aus Kunststoffbändern hergestellt werden, welche nach der Fertigstellung des Ausgangswickels zumindest in den über die Spritzmetallschichten vorstehenden Bereichen spröde sind, daß diese überstehenden Bereiche der Trennlagen abgebürstet werden und daß die Trennlagen nach dem Zerteilen in einzelne Mutterkondensatoren entfernt werden.

Die Trennlagen bestehen vorteilhaft aus Zelluloseacetobutyratfolie. Eine violette Zelluloseacetobutyratfolie ist besonders geeignet. Sie hat zusätzlich den Vorteil, daß sie sich farblich von den üblichen Kondensatorfolien unterscheidet. Dadurch kann unschwierig kontrolliert werden, ob sie vor dem Zersägen der Mutterkondensatoren in Einzelkondensatoren entfernt wurde. Das Abbürsten der überstehenden Teile der Trennfolie erfolgt vorteilhaft mittels einer rotierenden Topfbürste. Eine Topfbürste, deren Drähte üblicherweise aus Metall bestehen, reicht auch zur Entfernung der überstehenden Grate an den Kanten der Spritzmetallschichten der einzelnen Mutterkondensatoren aus.

Vor dem Zersägen wird der Ausgangskondensator vorteilhaft getempert. Eine Temperung von 2l/2 Stunden bei etwa 140°C reicht aus, um eine zusätzliche Versprödung der Folien zu erreichen. Dadurch wird das Abbürsten weiter erleichtert. Die Folie bricht weg, ohne ein Verschmieren der Kontaktschichten hervorzurufen.

Die Spritzmetallschicht wird hierbei zweckmäßig nach dem Schoop'schen Flammspritzverfahren hergestellt.

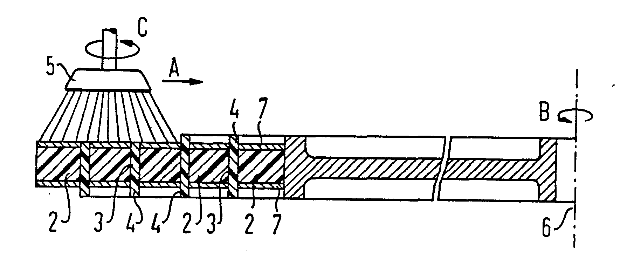

Die Erfindung wird nun anhand einer Figur näher erläutert. Sie ist nicht auf das in der Figur gezeigte Beispiel beschränkt. Die Figur zeigt das erfindungsgemäße Verfahren anhand einer entsprechenden Anordnung, welche in teilweise geschnittener und gebrochener Ansicht dargestellt ist.

Auf einer Trommel 1 mit großem Durchmesser sind mehrere Mutterkondensatoren 2 angeordnet. Über deren Schoopschichten 7 stehen Trennlagen 3 vor. Die überstehenden Teile 4 der Trennlagen 3 werden durch eine Topfbürste 3 abgebürstet. Die Topfbürste 5 dreht sich in Pfeilrichtung C und bewegt sich in Pfeilrichtung A über den Ausgangskondensator. Gleichzeitig dreht sich die Trommel 1 in Pfeilrichtung B. Die Geschwindigkeiten der verschiedenen Bewegungen sind so aufeinander abgestimmt, daß die überstehenden Teile 4 der Trennlagen 3 vom Ausgangskondensator vollständig abgeschliffen werden. Gleichzeitig werden Grate entfernt, welche durch das Aufspritzen des Metalls im Be-Teich des Durchtrittes der Trennlagen 3 durch die Schoopschichten 7 entstanden sind. Die Trommel 1 ist zur Rotationsachse 6 rotationssymmetrisch ausgebildet.

## Patentansprüche

1. Verfahren zur Herstellung von Schichtkondensatoren, bei dem auf eine Trommel mehrere Mutterwickel übereinander gewickelt werden, bei dem zwischen zwei Mutterwickel Trennlagen aus Kunststoff eingewickelt werden, welche über die Stirnflächen der Mutterwickel vorstehen, bei dem die Stirnflächen des so gebildeten Ausgangswickels mit einer Spritzmetallschicht vollständig überdeckt werden, bei dem die Trennlagen nicht vollständig mit Spritzmetall bedeckt werden, bei dem die über die Spritzmetallschichten überstehenden Teile der Trennlagen vor dem Zerteilen des so gebildeten Ausgangskondensators entfernt werden, bei dem der Ausgangskondensator durch zumindest einen radialen Schnitt aufgetrennt und entlang den Trennfolien in die einzelnen Mutterkondensatoren zerteilt wird und bei dem die Mutterkondensatoren oder Teile der Mutterkondensatoren in Einzelkondensatoren zersägt werden, dadurch gekennzeichnet, daß die Trennlagen aus Kunststoffbändern hergestellt werden, welche nach der Fertigstellung des Ausgangskondensators zumindest in den über die Spritzmetallschichten vorstehenden Bereichen spröde sind, daß diese überstehenden Bereiche der Trennlagen abgebürstet werden und daß die Trennlagen nach dem Zerteilen in einzelne Mutterkondensatoren entfernt werden.

2. Verfahren nach Anspruch 1, dadurch gekennzeichnet, daß als Trennlage eine Zelluloseacetobutyratfolie eingesetzt wird.

3. Verfahren nach einem der Ansprüche 7 oder 2, dadurch gekennzeichnet, daß die überstehenden Teile der Trennfolie mittels einer rotierenden Topfbürste abgebürstet werden.

4. Verfahren nach einem der Ansprüche 1 bis 3, dadurch gekennzeichnet, daß eine violette Zelluloseacetobutyratfolie eingewickelt wird.

5. Verfahren nach einem der Ansprüche 1 bis 4, dadurch gekennzeichnet, daß der Ausgangskondensator vor dem Zersägen getempert wird.

6. Verfahren nach Anspruch 5, dadurch gekennzeichnet, daß der Ausgangskondensator 2,5 Stunden lang bei etwa 140°C getempert wird.

## Claims

1. A method of making stacked capacitors in which a plurality of parent windings are wound one above another onto a drum, in which separating layers consisting of synthetic resin material are wound between two parent windings and project beyond the end faces of the parent windings, in which the end faces of the starting winding so formed are completely covered with a layer of sprayed metal, in which the separating layers are not completely covered with sprayed metal, in which those parts of the separating layers which project beyond the sprayed metal layers are removed prior to the division of the starting capacitor so formed, in which the starting capacitor is divided by at least one radial cut and is split into the individual parent capacitors along the separating foils, and in which the parent capacitors or part thereof are sawn into individual capacitors, characterised in that the separating layers are produced from synthetic resin strips which, after the production of the starting capacitor, are brittle at least in those zones which project beyond the layers of sprayed metal; that these projecting zones of the separating layers are brushed away; and that the separating layers are removed after the division into individual parent capacitors.

2. A method as claimed in Claim 1, characterised in that a cellulose acetate-butyrate foil is inserted as separating layer.

3. A method as claimed in one of Claims 1 or 2, characterised in that the projecting parts of the separating foil are brushed away by means of a rotating pot brush.

4. A method as claimed in one of Claims 1 to 3, characterised in that a violet cellulose acetatebutyrate foil is wound in.

5. A method as claimed in one of Claims 1 to 4, characterised in that the starting capacitor is annealed before it is sawn up.

6. A method as claimed in Claim 5, characterised in that the starting capacitor is annealed for 2.5 hours at about 140°C.

## Revendications

1. Procédé pour fabriquer des condensateurs à couches, selon lequel on enroule successivement plusieurs enroulements-mères sur un tambour, on enroule, entre-deux enroulements-mères, des couches de séparation en matière plastique qui font saillie sur les faces frontales des enroulements-mères, on recouvre complètement les faces frontales de l'enroulement de départ ainsi obtenu avec une couche métallique déposée par pulvérisation, sans recouvrir complètement les couches de séparation avec le métal déposé par pulvérisation, on élimine les parties des couches de séparation, qui font saillie par rapport aux couches métalliques formées par projection, avant la subdivision du condensateur de départ ainsi formé, on découpe le condensateur de départ en pratiquant au moins une coupure radiale et on le subdivise le long des feuilles de séparation, de manière à former les condensateurs-mères individuels, et on subdivise par sciage les condensateurs-mères ou des parties de ces derniers pour former des condensateurs individuels, caractérisé par le fait qu'on réalise les couches de séparation avec des bandes en matière plastique, qui après la fabrication du condensateur de départ, sont au moins cassantes dans les parties en saillie par rapport aux couches métalliques formées par projection, qu'on élimine par brossage ces zones en saillie des couches de séparation et qu'on élimine les couches de séparation après la subdivision fournissant les différents condensateurs-mères.

2. Procédé suivant la revendication 1, caractérisé par le fait qu'on utilise comme couche de séparatiom une feuille d'acétobutyrate de cellulose.

3. Procédé suivant l'une des revendications 1 ou 2, caractérisé par le fait qu'on élimine par brossage les parties saillantes de la feuille de séparation à l'aide d'une brosse rotative en forme de pot.

4. Procédé suivant l'une des revendications 1 à 3, caractérisé par le fait qu'on enroule une feuille d'acétobutyrate de cellulose violette..

5. Procédé suivant l'une des revendications 1 à 4, caractérisé par le fait qu'avant le sciage, on réalise la mise en température du condensateur de départ.

6. Procédé suivant la revendication 5, caractérisé par le fait que la mise en température du condensateur de départ s'effectue pendant une durée de 2,5 heures à environ 140°C.